# EUROPEAN PATENT SPECIFICATION

(11) **EP 0 848 182 B1**
(45) Date of publication and mention of the grant of the patent: **05.11.2003**
(21) Application number: 97850156.7
(22) Date of filing: 10.11.1997
(51) Int. Cl.: F16F 9/50, F16F 9/34

(54) **Shock absorber arrangement and use**
Einrichtung und Benutzung eines Stossdämpfers
Arrangement et utilisation d'un amortisseur

(30) Priority: 11.12.1996 SE 9604548
(43) Date of publication of application: 17.06.1998
(73) Proprietor: ÖHLINS RACING AB, 194 27 Upplands Väsby (SE)
(72) Inventor: Öhlin, Kenth, 19148 Sollentuna (SE); Danek, Magnus, 141 38 Huddinge (SE)
(74) Representative: Karlsson, Berne

(56) References cited:
- DE-A- 2 323 362
- DE-C- 4 002 882
- FR-A- 962 693
- GB-A- 2 070 730
- US-A- 4 079 925

## Description

### TECHNICAL FILED

The present invention relates to a shock absorber described in the preamble of the following claim 1.

### STATE OF THE ART

It is already known to arrange an elastic annular element in a hole in a piston forming part of a shock absorber for the purpose of achieving small essentially undamped wheel movements on a vehicle. Said small essentially undamped wheel movements increase or improve roadholding. It is also referred to DE-A-2 323 362 and DE-C-4 002 882.

### DESCRIPTION OF THE INVENTION

### TECHNICAL PROBLEM

The previously known application of an elastic ring has on the whole taken place without establishing a relation to other medium-influencing members in the shock absorber. Said other medium-influencing members may take the form of shim valves, conical valves, fixed throttle valves etc. This has meant that it has not been possible fully to use or exploit the advantages which the use of an elastic ring can bring. Establishing a correct relation imparts on optimum appearance to the force/velocity curve of the shock absorber and prevents overshooting tendencies in the latter, which is a prerequisite for said optimum roadholding. The invention aims to solve this problem inter alia.

In connection with the development of the invention, it has been possible to ascertain that standing waves can occur in the system (via the shock absorber). These standing waves and/or pressure surges impair the shock-absorbing effect. The invention substantially or completely eliminates the phenomenon of standing waves and their negative effects.

In certain situations, where said roadholding problem is not so marked, it may also be important to be able to arrive at a shock absorber construction which opens the way for manufacturing-friendly and service-friendly construction and production of the shock absorber. The invention solves this problem also. The circulation type in particular represents an advantageous implementation of the function performed using the elastic ring. Moreover, means and instructions are indicated with regard to how the small essentially undamped movements are to be selected, as are advantageous distances between the function carried out by the respective elastic element and the function or functions of a respective other member, in the form of said shim valves, conical valves and fixed throttle(s) etc., which influences the medium during shock absorption.

DE-A-2 323 262 is quite missing an elastic ring which due to its elasticity can solve said problems. Even if considered as the closest prior art DE-C-4 002 882 lacks on important features for solving the set problems.

### SOLUTION

The new shock-absorber is characterised by the features described in the characterising part of the following claim 1.

In a proposed embodiment of the new shock absorber, a distance between the elastic ring and shim packets arranged on the piston is selected preferably to correspond to essentially half the piston height, or be smaller. In the case where the piston has one or more throttles in said second passage(s), the elastic ring is located in an annular hole situated outside the respective said throttle. A radius for the respective throttle is related to the radius of the elastic ring. The first-named radius can be selected to be for example between 4/5-3/4 of the radius of the elastic ring. In the case where the elastic ring is located inside a respective second passage in the piston, the relation established between the radius of the elastic member and the radius of the respective second passage positioning in the piston is such that the first-named radius has at value which is 1/2-2/3 of the value of the first-named radius. In the case with transverse first or second passage parts, optimum values are selected for the distance between the seal and the transverse passage and the second passage and also the distance between the transverse passage in the first passage an the lower parts of the shim packet.

In a preferred embodiment, the section of the elastic member is of hexagonal shape, which is preferably horizontal seen in the longitudinal direction of the shock absorber. The elastic member is also arranged to give rise to essentially undamped wheel movements within the range 0.1-1.0 mm. The undamped wheel movements are preferably selected so as to lie within the range 0.3-0.6 mm, or more specifically between 0.4 and 0.5 mm.

Further embodiments of the shock absorber is disclosed in the following sub-claims.

### ADVANTAGES

By means of the invention, it is easy to choose between a shock absorber function which is optimized to a very great degree and simplified manufacturing-friend-liness and service-friendliness of the shock absorber. The latter case finds application in particular in so-called circulation absorbers. Advantageous distances between the various medium-influencing members can be introduced, which prevents said overshooting in the force/velocity curve of the shock absorber. Overshooting which may arise as a result of resilience in the medium, inertia in the valves, friction etc. is thus prevented. Moreover, the invention prevents, or essentially eliminates, the occurrence of pressure surges and/or standing waves in the medium. The built-in function(s) allow manufacturing to be carried out extremely cheaply.

### DESCRIPTION OF THE FIGURES

An embodiment proposed for the present of a shock absorber according to the invention will be described below with simultaneous reference to the attached drawings, in which
- Figure 1: shows in longitudinal section parts which are affected by the invention, the main connection of the shock absorber to a chassis and a wheel being shown, in addition to the piston and the cylinder,
- Figure 2: shows in longitudinal section parts of a shock absorber piston where the piston is provided with both the elastic member and a further medium-influencing member in the form of a conical valve,
- Figure 3: shows a third embodiment of a piston which comprises both the elastic member and a fixed throttle passage,
- Figure 4: shows in longitudinal section a further embodiment of a piston which comprises both the elastic member and further medium-influencing members in the form of shim packets,
- Figure 5: shows a shock absorber curve with force as a function of velocity, and
- Figure 6: shows a shock absorber curve with force as a function of travel.

### DETAILED EMBODIMENT

The invention can be used inter alia on shock absorbers which are sold by Öhlins Racing in the open market.

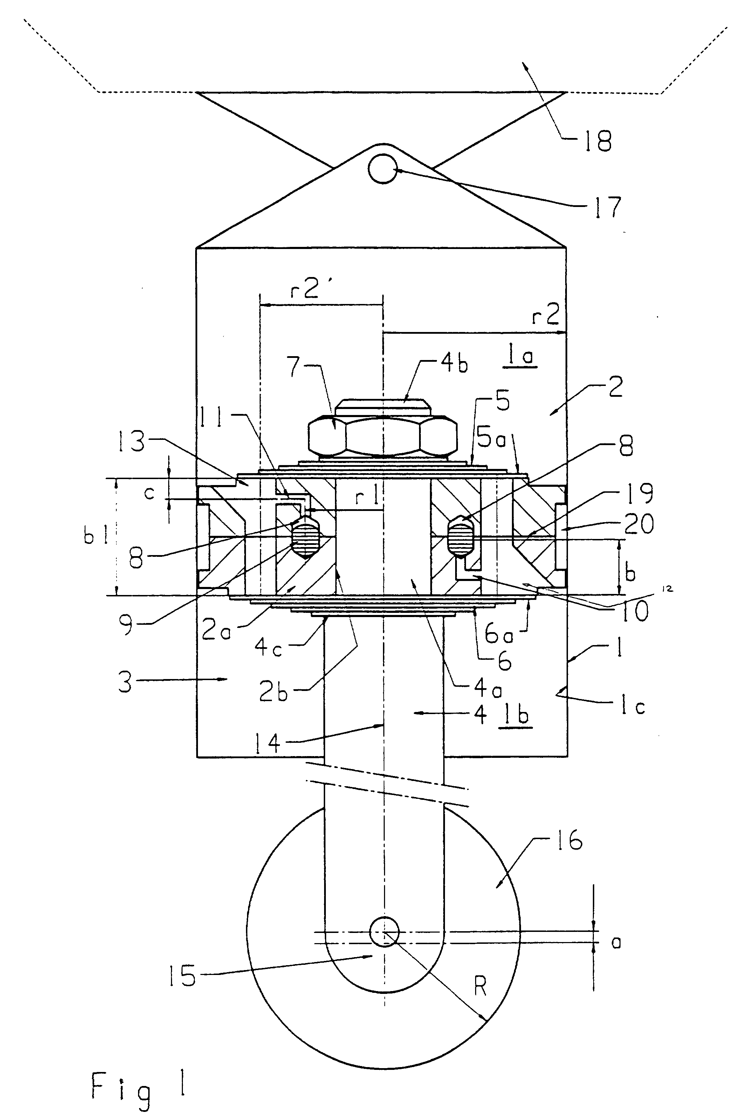

In Figure 1, a shock absorber is shown in a general manner with parts which are affected by the invention, a cylinder being shown by 1, a piston by 2 and a working medium, in which the piston works in the cylinder, by 3. The piston is fastened to a piston rod 4 which is provided with a bearing part 4a for the piston body which in this connection has a through-hole. The bearing part 4a is provided at its inner end with a thread 4b. Furthermore, shim packets 5 and 6 of known type are arranged on either side of the piston. The piston and the shim packets are fixed to the piston rod by means of a nut 7 which is screwed firmly on a thread 4b so that the shim packets and the piston body are pressed in the direction of a shoulder 4c, against which the lowest shim bears. The shims are provided with holes through which the piston rod part 4a extends. The piston 2a is provided with an inner wall 2b forming said hole, by means of which the piston bears against the piston rod part 4a. By means of said holes in the piston body and the shims, the piston and the shims are also fixed in the radial direction.

The piston body is provided with an annular hole 8, in which an elastic ring 9 is mounted slightly displaceably in the longitudinal direction R of the shock absorber. The hole 8 is connected to one or more first passages 10, 11 which open into or are connected to the cylinder spaces 1a, 1b on the upper and lower sides respectively of the piston. A first passage is shown in Figure 1 by passage parts 10 and 11 respectively, the first passage part 10 making a connection to the cylinder space 1b on the lower side of the piston and the second passage part making a connection to the cylinder space 1a on the upper side of the piston. The first passage(s) lead(s) through the hole 8, in addition to which the passage part 10 opens into the hole 8 on the lower side of the elastic ring and the passage part 11 opens into the hole 8 on the upper side of the elastic ring. In this way, the elastic member is pressed downwards (towards the space 1b) on compression and upwards (towards the space 1a) on expansion of the shock absorber. The arrangement is in this connection such that the elastic sealing ring moves in the longitudinal direction R during small initial wheel movements from or around an initial position for the shock absorber (see below).

The piston is also provided with a second passage 12, 13 for leading the working medium 3 through the piston between the spaces 1a and 1b of the cylinder in a known manner. Said second passages may be parallel to the longitudinal axis of the shock absorber or have helical courses through the piston. The lower shim packet 6 operates on compression of the shock absorber and the upper shim packet 5 operates on expansion of the shock absorber. In the exemplary embodiment, the first passage parts 10 and 11 open into the second holes 12 and 13 respectively. In this way, the hole 8 and the ring 9 can be given a position close to the piston centre (cf. longitudinal axis 14). In the exemplary embodiment, an elastic ring can be given a radius r1 which is roughly half the piston radius r2 or smaller. In a preferred embodiment, the radius r1 is 1/2-1/3 the piston radius r2. The shock absorber piston 4 has at its one end a holder 15, on which a symbolically shown wheel 16 is mounted directly or via a link (link mechanism). The mounting can take place in a manner known per se. In the case of small wheel or link movements, for example movements of 0.1-1.0 mm around a zero position or initial position, the wheel remains essentially undamped or slightly progressively damped. In different embodiments, said movement values are selected preferably within the range 0.2-0.6 mm, most preferably between 0.4 and 0.5 mm.

An important feature is also the influence on the medium obtained by means of the shim packets 5 and/or 6, that is to say the damping function works in very close association with the function of the elastic ring 9. A distance b between the innermost shim 5a and 6a respectively and the section centre 9a of the annular element/member is to have a value where the effect on the force and velocity curves (see below) of the shock absorber from inertia and friction of the medium-influencing members [lacuna]. Moreover, pressure surges and standing pressure waves can be eliminated or kept to a minimum.

According to the embodiment in question of the idea of the invention, said value b is to be less than half the height bl of the piston or smaller.

The shock absorber according to Figure 1 also has a fixing arrangement 17 for the shock absorber in the actual vehicle 18. The piston is in principle made with upper and lower parts assembled via a parting plane 19 in the transverse direction of the shock absorber. The piston is sealed against the inner wall 1c of the cylinder 1 via a piston seal 20. A distance between the lower shim 5a and the transverse part 11 of the first passage is indicated by c. This distance represents a proximity between the medium-influencing members 5 and 9 respectively. In the embodiment shown, this distance is less than the height of the section of the elastic member. More specifically, the height of the section in the longitudinal direction of the shock absorber according to Figure 1 is meant in this connection. The radius r1 of the elastic element is less than a radius r2' for the respective second passage longitudinal axis. r1 is thus 1/2-3/4 of r2'.

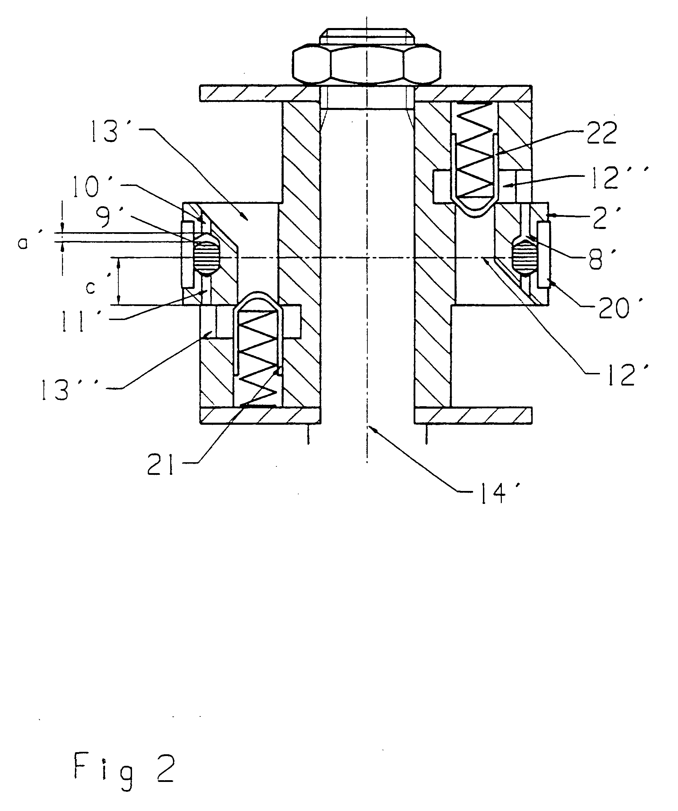

In the embodiment according to Figure 2, the shim packets are replaced by conical valves 21, 22 of a type known per se. In this case, the elastic annular member 9' has been assigned a position close to the periphery of the piston 2'. The first passage parts 10' and 11' have been assigned courses parallel to (are not L-shaped as in Figure 1) the longitudinal axis 14' of the shock absorber and are situated close to the periphery of the piston. Conical valves 21, 22 work with second passages 12', 13' which comprise passage parts 12'', 13'' extending in the transverse direction. A movement a' of the elastic sealing ring 9' corresponds to the wheel or link movement as above. The elastic member 9' in this case has a dual function in that it also seals against an internal surface on the piston seal 20'. An advantageous manufacturing method is chartacterized in this connection inter alia in that the elastic ring is located in its hole 8' and in that the piston seal 20' is subsequently applied to the periphery of the piston for interaction via its inside with the elastic member. In Figure 2, a distance c' between the section centre of the sealing member 9' and the transverse hole 13' is indicated. Said distance is essentially the same size as or slightly greater than the height of the section in the longitudinal direction of the shock absorber.

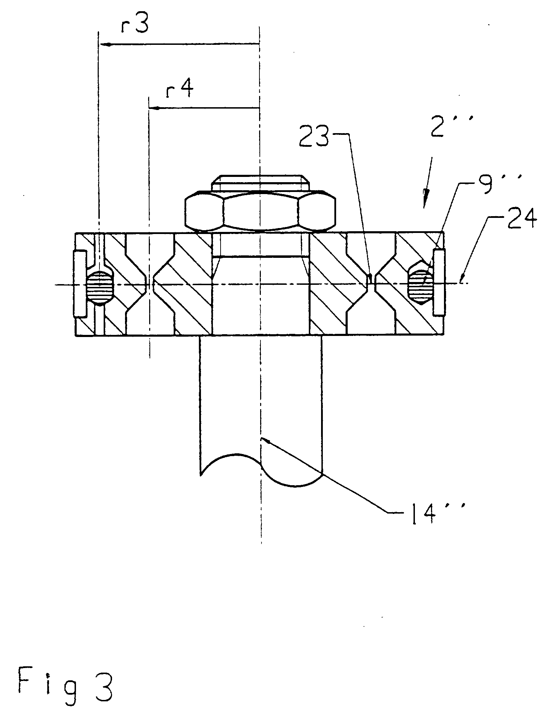

The invention also functions, according to Figure 3, in a piston 2' with one or more throttles 23. The throttles and the elastic member (the ring) 9'' in this connection have their centres located on essentially the same cross-sectional plane 24. A radius r3 from the longitudinal axis 14'' of the shock absorber to the section centre of the seal 9'' is greater than a radius r4 for the position of the throttle 23. The radius r4 is between 1/5-1/3, preferably 1/4, of the radius r3. In other respects, reference can be made to the above.

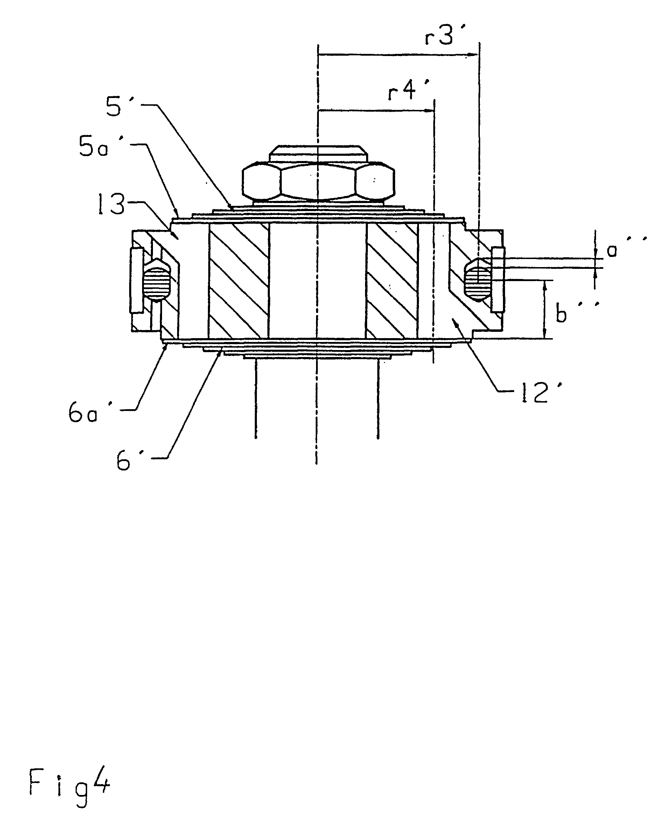

Figure 4 shows the case where the elastic member is located in a hole at the periphery of the piston and the elastic member seals against the inner surface of the piston seal (cf. the case according to Figure 2). The movement distance of the elastic member is indicated by a''. The distance between the section centre of the elastic member and the lower shim packet is shown by b''. The radius r4' is 1/2 to 2/3 the radius r3'. The embodiment according to Figure 4 thus draws its features from the embodiments according to Figures 1 and 3 with the difference that the elastic member according to Figure 1 is located closer to the centre, that is to say has a substantially smaller diameter than is the case in the embodiment according to Figure 3. A smaller elastic sealing ring results in more distinct movements. The differences between Figures 3 and 4 also concern the type of medium-influencing member (throttle instead of shim packet).

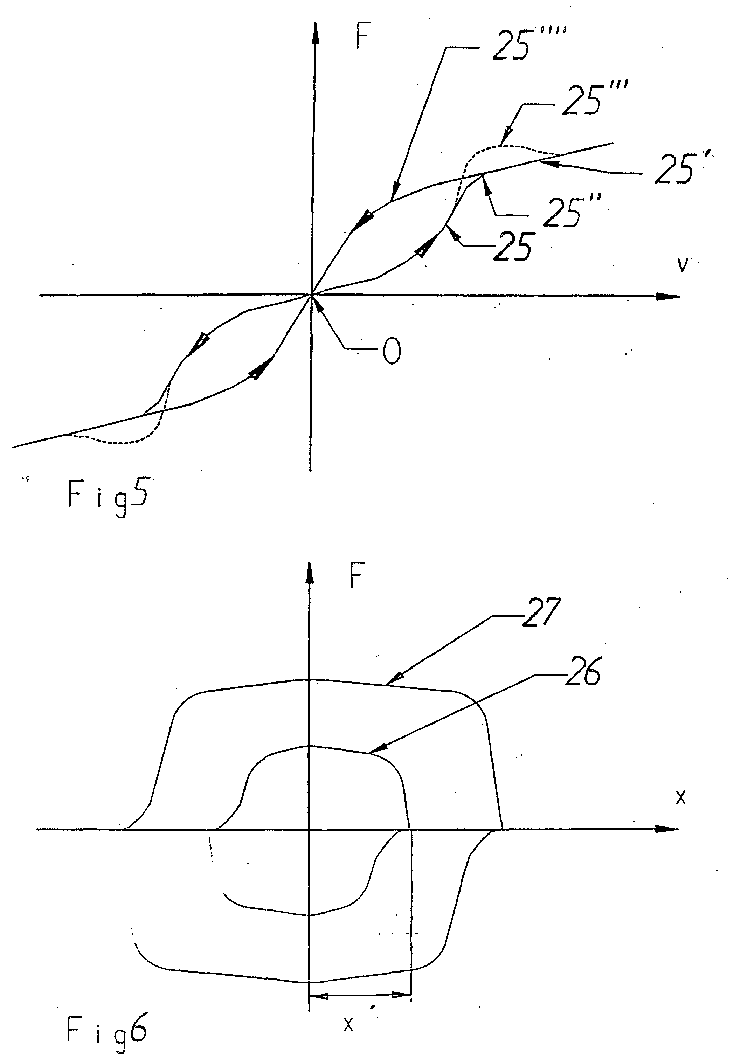

Figure 5 shows the force and velocity curve/velocity curves for the shock absorber described above. The Y-axis represents the force axis F and the X-axis represents the velocity axis V. The diagram shows both positive and negative directions. The curve 25 rising in the positive direction can be given the shape shown in Figure 5 or given other shapes. The wheel movements are damped according to the case shown with the exponentially growing curve part 25. In accordance with the embodiments according to Figures 1, 2, 3 and 4 as above, the curve part 25 becomes the curve part 25' for damping of the wheel movements via a small, gentle translation part 25''. In accordance with the embodiments according to said figures, the overshooting tendency according to the curve part 25''' was in this way avoided. Such overshooting tendencies impair the grip of the wheel on the surface. In a preferred embodiment, the aim is to obtain a direct transition between the curve part 25 and 25'. The return of the curve according to a hysteresis function from a wheel deflection to the '0' position is indicated by 25''''. The curve has the corresponding shape in the lower left quadrant according to Figure 5 and will therefore not be described here.

Figure 6 shows different curves 26, 27 with the damping force F as a function of travel (X). The curve 26 is obtained for short strokes. The elastic member according to the invention thus causes the damping force to be a little (a lot) smaller in the case of small wheel movements (that is to say the short strokes) compared with the case of long strokes which are represented by the curve 27. The comparison is carried out at the respective fixed V max (cf. Figure 5). A short length of movement is shown by X'.

## Claims

1. Shock absorber for minimizing damping of small piston stroke movements in response to accordingly small wheel movements around zero position in the force/velocity curve (39) of the absorber with aid of an elastic member (9), the absorber comprising said piston (2) and said elastic member (9) which is located in first passage means (10, 11) for the working medium (3) of the shock absorber so that, at small piston stroke movements it allows medium flow through the first passage means (10, 11) and at greater piston stroke movements, it prevents said medium flow, said first passage means (10, 11) with the associated elastic member (9) being arranged in the piston (2) provided with at least one second passage (12, 13) in the piston (2) having medium-influencing members (5, 6, 21-23) in fluid communication with the said at least one second passage (12, 13), **characterized in that** the elastic member (9) consists of an elastic O-ring arranged slidably in an annular cavity (8) positioned in the piston inside of the bearing parts (20, 20') of the piston (2), **in that** said annular cavity (8) is connected to the first passage means (10, 11) and **in that** the elastic O-ring (9) is located between said medium-influencing members (5, 6) which are positioned opposed to each other on respective piston faces of the piston (2).

2. Shock absorber according to Patent Claim 1, **characterized in that** the first passages are arranged at the outer periphery (2') of the piston where the piston has the annular cavity (8') which in its outer part is delimited by a peripheral sliding seal (20') of the piston, which seal interacts with an inner wall of the shock absorber cylinder, and **in that** the first passages extend essentially in the longitudinal direction of the shock absorber.

3. Shock absorber according to Patent Claim 1, **characterized in that**, in the case the piston is provided with conical valve(-s) (21, 22) functioning in axially extending second passages (12', 13') which include transverse holes and the working medium is guided between the lower and upper sides of the piston by means of the conical valve(-s), the distance (c') between the section of the elastic O-ring and respective transverse hole is the same size or slightly greater than the height of the section in the longitudinal direction of the shock absorber.

4. Shock absorber according to Patent Claim 1, **characterized in that** a distance (b) between the elastic ring and one or two shim packets (5 6) of shim valves arranged on the piston face(s) corresponds to half the piston height (b), or is smaller.

5. Shock absorber according to Patent Claim 1, **characterized in that** the piston has one or more fixed throttles (23) in said second passage(s), and **in that** the elastic ring is located in the annular cavity situated outside said throttle, a radium (r4) for the respective throttle position constituting 1/2-2/3 of the radius (r3) of the elastic ring.

6. Shock absorber according to any one of the preceding patent claims, **characterized in that** the hole for the elastic ring is of hexagonal shape.

7. Shock absorber according to any one of the preceding patent claims, **characterized in that** the essentially undamped wheel movements brought about by means of the elastic ring lie within a range of 0.1-1.0 mm, preferably within the range 0.3-0.6 mm or the range 0.4 and 0.5 mm.

## Patentansprüche

1. Stoßdämpfer zum Minimieren des Dämpfens kleiner Kolbenhubbewegungen als Reaktion auf entsprechend kleine Radbewegungen um die Nullposition in der Kraft/Geschwindigkeitskurve (39) des Stoßdämpfers mit Hilfe eines elastischen Teils (9), wobei der Stoßdämpfer den Kolben (2) und das elastische Teil (9) aufweist, welches sich in einer ersten Durchgangseinrichtung (10, 11) für das Arbeitsmedium (3) des Stoßdämpfers befindet, so dass bei kleinen Kolbenhubbewegungen ein Medienstrom durch die erste Durchgangseinrichtung (10, 11) zugelassen und dieser Medienstrom bei größeren Kolbenhubbewegungen verhindert wird, wobei die erste Durchgangseinrichtung (10, 11) mit dem zugehörigen elastischen Teil (9) in dem Kolben (2) angeordnet ist, der mindestens einen zweiten Durchgang (12, 13) im Kolben (2) aufweist, welcher mit medienbeeinflussenden Teilen (5, 6, 21-23) ausgestattet ist, welche in Flüssigkeitskommunikation mit dem mindestens einen zweiten Durchgang (12, 13) stehen, **dadurch gekennzeichnet, dass** das elastische Teil (9) aus einem elastischen O-Ring besteht, der gleitbar in einer ringförmigen Ausnehmung (8) angeordnet ist, welche im Kolben im Innern der Lagerteile (20, 20') des Kolbens (2) angeordnet sind, dass die ringförmige Ausnehmung (8) mit der ersten Durchgangseinrichtung (10, 11) verbunden ist und dass der elastische O-Ring (9) zwischen den medienbeeinflussenden Teilen (5, 6) positioniert ist, die einander auf entsprechenden Kolbenflächen des Kolbens (2) gegenüberliegen.

2. Stoßdämpfer nach Patentanspruch 1, **dadurch gekennzeichnet, dass** die ersten Durchgänge am äußeren Umfang (2') des Kolbens angeordnet sind, wo der Kolben die ringförmige Ausnehmung (8') aufweist, die in ihrem äußeren Teil durch eine Umfangs-Gleitdichtung (20') des Kolbens begrenzt wird, wobei diese Dichtung mit einer Innenwand des Stoßdämpferzylinders zusammenwirkt, und dass die ersten Durchgänge im Wesentlichen in Längsrichtung des Stoßdämpfers verlaufen.

3. Stoßdämpfer nach Patentanspruch 1, **dadurch gekennzeichnet, dass** in dem Falle, dass der Kolben mit einem oder mehreren Kegelventilen (21, 22) ausgestattet ist, der/die in axial verlaufenden zweiten Durchgängen (12', 13') wirkt/wirken, welche Querlöcher aufweisen, wobei das Arbeitsmedium zwischen der Unter- und Oberseite des Kolbens mittels des Kegelventils/der Kegelventile geführt wird, der Abstand (c') zwischen dem Abschnitt des elastischen O-Rings und dem entsprechenden Querloch gleich groß ist wie oder geringfügig größer ist als die Höhe des Abschnitts in Längsrichtung des Stoßdämpfers.

4. Stoßdämpfer nach Patentanspruch 1, **dadurch gekennzeichnet, dass** der Abstand (b) zwischen dem elastischen Ring und einem oder zwei Einstellplättchenpaketen (5, 6) aus Einstellventilen, die an der oder den Kolbenfläche(n) angebracht sind, die Hälfte der Kolbenhöhe oder weniger beträgt.

5. Stoßdämpfer nach Patentanspruch 1, **dadurch gekennzeichnet, dass** der Kolben eine oder mehrere feste Drosseln (23) in dem oder den zweiten Durchgang/-gängen aufweist und dass sich der elastische Ring in der ringförmigen Ausnehmung befindet, die außerhalb der Drossel angeordnet ist, wobei ein Radiusabschnitt (r4) für die jeweilige Drosselposition ½ bis 2/3 des Radius (r5) des elastischen Rings beträgt.

6. Stoßdämpfer nach einem der vorhergehenden Patentansprüche, **dadurch gekennzeichnet, dass** das Loch für den elastischen Ring eine sechseckige Form aufweist.

7. Stoßdämpfer nach einem der vorhergehenden Patentansprüche, **dadurch gekennzeichnet, dass** die mittels des elastischen Rings bewirkten und im Wesentlichen ungedämpften Radbewegungen in einem Bereich von 0,1 bis 1,0 mm, vorzugsweise im Bereich von 0,3 bis 0,6 mm oder im Bereich von 0,4 bis 0,5 mm, liegen

## Revendications

1. Amortisseur de choc pour réduire au minimum l'amortissement des petits mouvements de la course de piston en réponse à des mouvements par conséquent petits autour de la position zéro dans la courbe de vitesse/force (39) de l'amortisseur à l'aide d'un élément élastique (9), l'amortisseur comprenant ledit piston (2) et ledit élément élastique (9) qui est placé dans les premiers moyens de passage (10, 11) pour le fluide moteur (3) de l'amortisseur de choc de telle sorte que lors des petits mouvements de course de piston, il laisse passer le fluide à travers les premiers moyens de passage (10, 11) et lors des mouvements de course de piston plus importants, il empêche l'écoulement dudit fluide, lesdits premiers moyens de passage (10, 11) avec l'élément élastique associé (9) étant disposés dans le piston (2) pourvu d'au moins un second passage (12, 13) dans le piston (2) ayant des éléments influençant le fluide (5, 6, 21-23) en communication fluidique avec au moins ledit second passage (12, 13) **caractérisé en ce que** l'élément élastique (9) consiste en un joint torique élastique agencé de façon coulissante dans une cavité annulaire (8) placée dans le piston à l'intérieur des éléments de roulement (20, 20') du piston (2), **en ce que** ladite cavité annulaire (8) est raccordée aux premiers moyens de passage (10, 11) et **en ce que** le joint torique élastique (9) est placé entre lesdits éléments influençant le fluide (5, 6) qui sont placés l'un en face de l'autre sur des faces de piston respectives du piston (2).

2. Amortisseur de choc selon la revendication 1, **caractérisé en ce que** les premiers passages se trouvent à la périphérique externe (2') du piston, dans laquelle le piston comporte la cavité annulaire (8') qui dans sa partie externe est délimitée par un joint coulissant périphérique (20') du piston, joint interagissant avec une paroi interne du cylindre de l'amortisseur de choc, et **en ce que** les premiers passages s'étendent essentiellement dans le sens longitudinal de l'amortisseur de choc.

3. Amortisseur de choc selon la revendication 1, **caractérisé en ce que**, dans le cas où le piston comporte une (des) soupape(s) conique(s) (21, 22) fonctionnant dans des seconds passages s'étendant axialement (12', 13') qui comportent des trous transversaux et le fluide moteur est guidé entre les côtés supérieur et inférieur du piston au moyen de la/des soupape(s) conique(s), la distance (c') entre la section du joint torique élastique et le trou transversal respectif est de la même taille ou légèrement supérieure à la hauteur de la section dans le sens longitudinal de l'amortisseur de choc.

4. Amortisseur de choc selon la revendication 1, **caractérisé en ce qu'**une distance (b) entre le joint élastique et un ou deux paquets de compensation (5, 6) des soupapes de compensation disposées sur la (les) face(s) du piston correspond à la moitié de la hauteur du piston (b) ou est plus petite.

5. Amortisseur de choc selon la revendication 1, **caractérisé en ce que** le piston comporte une ou plusieurs soupapes d'étranglement fixes (23) dans ledit (lesdits) second passage(s), et **en ce que** le joint élastique est placé dans la cavité annulaire située en dehors de ladite soupape d'étranglement, un rayon (r4) pour la position de la soupape d'étranglement respective constituant 1/2-2/3 du rayon (r3) du joint élastique.

6. Amortisseur de choc selon l'une quelconque des revendications précédentes, **caractérisé en ce. que** le trou du joint élastique est de forme hexagonale.

7. Amortisseur de choc selon l'une quelconque des revendications précédentes, **caractérisé en ce que** les mouvements de roulements essentiellement non amortis induits par le joint élastique sont compris dans une gamme de 0,1-1 mm, de préférence dans la gamme 0,3-0,6 mm ou la gamme 0,4 et 0,5 mm.
